# EUROPÄISCHE PATENTANMELDUNG

(11) **EP 4 403 314 A1**
(43) Veröffentlichungstag der Anmeldung: **24.07.2024**
(21) Anmeldenummer: 24150872.0
(22) Anmeldetag: 09.01.2024
(51) Int. Cl.: B25J 5/00, B25J 11/00, B62D 57/024

(54) **BAUROBOTER MIT HUBVORRICHTUNG UND VERFAHREN ZUM BEARBEITEN EINES GEBÄUDEELEMENTS**

(30) Priorität: 23.01.2023 EP 23152864
(71) Anmelder: Hilti Aktiengesellschaft, 9494 Schaan (LI)
(72) Erfinder: Schmidt, Peer, 88131 Lindau (DE); Bralla, Dario, 9470 Buchs (CH)
(74) Vertreter: Hilti Aktiengesellschaft Corporate Intellectual Property

(57) **Zusammenfassung**

Die Erfindung betrifft einen **Bauroboter (10)** zur Bearbeitung eines Gebäudeelements (12), umfassend eine Fahrplattform (14), eine Hubvorrichtung (16), die auf der Fahrplattform (14) angeordnet ist, und eine an der Hubvorrichtung (16) angeordnete Werkzeugmaschine (17), in die ein Werkzeug (18) aufnehmbar ist. Sie ist dadurch gekennzeichnet, dass der Bauroboter (10) eingerichtet ist, das Werkzeug (18) unter einem Auftreffwinkel (alpha) schräg zu einer Oberflächennormalen (N) eines zu bearbeitenden Gebäudeelements (12) auszurichten. Weiter betrifft die Erfindung ein Verfahren (1000). Die Erfindung ermöglicht eine besonders flexible Ausführung von Bauarbeiten.

## Beschreibung

Die Erfindung geht aus von einem Bauroboter zur Bearbeitung eines Gebäudeelements, umfassend eine Fahrplattform, eine Hubvorrichtung, die auf der Fahrplattform angeordnet ist, und eine an der Hubvorrichtung angeordnete Werkzeugmaschine, in die ein Werkzeug aufnehmbar ist.

Ein solcher Bauroboter kann eingerichtet sein, Bauarbeiten an einem Gebäudeelement, wie beispielsweise einer Gebäudedecke, auszuführen. Beispielsweise kann er eingerichtet sein, an vordefinierten Positionen Löcher in die Gebäudedecke zu bohren. Mit einem solchen Bauroboter können Bauarbeiter von ansonsten körperlich stark belastenden Tätigkeiten entlastet werden.

Um einen breiten Einsatz eines solchen Bauroboters zu ermöglichen, sollte der Bauroboter flexibel einsetzbar und möglichst kostengünstig herstellbar sein.

Aufgabe der vorliegenden Erfindung ist es daher, einen Bauroboter der eingangs genannten Art anzubieten, der besonders flexibel einsetzbar und kostengünstig herstellbar ist. Ferner soll ein Verfahren angeboten werden, durch das Bauarbeiten an Gebäudeelementen besonders flexibel und kostengünstig ausführbar sind.

Gelöst wird die Aufgabe durch einen Bauroboter zur Bearbeitung eines Gebäudeelements, umfassend eine Fahrplattform, eine Hubvorrichtung, die auf der Fahrplattform angeordnet ist, und eine an der Hubvorrichtung angeordnete Werkzeugmaschine, in die ein Werkzeug aufnehmbar ist, wobei der Bauroboter eingerichtet ist, das Werkzeug unter einem Auftreffwinkel schräg zu einer Oberflächennormalen eines zu bearbeitenden Gebäudeelements und / oder zu einer Vertikalen, insbesondere selbsttätig, auszurichten.

Üblicherweise weist das Werkzeug, beispielsweise ein Bohrer, ein Meißel, ein Setzwerkzeug oder dergleichen, eine Längsachse auf. Somit kann der Bauroboter eingerichtet sein, das Werkzeug derart auszurichten, dass seine Längsachse mit einem dem Auftreffwinkel entsprechenden Winkel schräg zur Oberflächennormalen steht.

Der Bauroboter kann motorisiert sein, um den Auftreffwinkel selbsttätig einzustellen.

Der Bauroboter kann insbesondere eingerichtet sein, den Auftreffwinkel abhängig von einem horizontalen Abstand der Fahrplattform, beispielsweise eines Mittelpunkts der Fahrplattform, von einer Arbeitsposition, an der eine Bauarbeit am Gebäudeelement ausgeführt werden soll, einzustellen.

Der Erfindung liegt dabei unter anderem die Erkenntnis zugrunde, dass bei vielen Arten von Bauaufgaben es nicht zwingend erforderlich ist, das Werkzeug senkrecht zur Oberflächennormalen aufzusetzen. Beispielsweise kann ein Bohrloch in einer Gebäudedecke, beispielsweise aus Stahlbeton, mit einem geringen, nicht verschwindenden, Auftreffwinkel schräg zur Oberflächennormalen gebohrt werden. In das Bohrloch kann beispielsweise ein Betonanker gesetzt werden. Der Betonanker kann dann trotz des von 0° verschiedenen Auftreffwinkels etwaige Lastanforderungen sowie andere Sicherheitsanforderungen vollumfänglich erfüllen.

Besonders bei einem großen Hub der Hubvorrichtung ergibt sich somit durch geringfügiges Schrägstellen des Werkzeugs, beispielsweise durch Verschwenken der Hubvorrichtung relativ zur Oberflächennormalen, eine überraschend einfache Möglichkeit, einen großen Bereich entlang der Oberfläche des Gebäudeelements mit dem Werkzeug erreichen zu können, ohne den Bauroboter, insbesondere seine Fahrplattform, insgesamt verlagern zu müssen.

Hierdurch lassen sich die Steuerung des Bauroboters sowie die Mechanik des Bauroboters, beispielsweise der Hubvorrichtung, wesentlich vereinfachen. Herstellungskosten lassen sich somit reduzieren. Die geringe mechanische Komplexität ermöglicht ein geringes Gesamtgewicht und / oder eine besonders kompakte Bauweise. Der Bauroboter lässt sich dadurch einfach transportieren, wodurch er besonders flexibel einsetzbar sein kann.

Der Bauroboter, insbesondere das Werkzeug, kann dadurch auch Arbeitspositionen erreichen, die sonst unerreichbar wären. Auch dadurch lässt sich der Bauroboter besonders flexibel einsetzen.

Eine Verlagerung, insbesondere eine Positionsänderung, des Bauroboters insgesamt ist häufig sehr aufwändig, insbesondere sehr zeitaufwändig. Beispielsweise kann es nach einer Verlagerung der Fahrplattform erforderlich sein, eine Position und / oder eine Lage des Bauroboters, insbesondere des Werkzeugs, völlig neu zu bestimmen.

Da der hier beschriebene Bauroboter weniger Verlagerungen zur sequenziellen Ausführung mehrerer Bauarbeiten an benachbarten Arbeitspositionen des Gebäudeelements benötigt, kann zudem seine Effizienz bei der Ausführung von Bauarbeiten gesteigert werden. Dies kann zu einer zusätzlichen Verringerung von Gesamtkosten für die Bauarbeiten führen.

Übliche Anforderungen an Anker können erfüllt werden sowie Bauarbeiten wie beispielsweise Bohren oder Meißeln können jedenfalls erfolgreich ausgeführt werden, wenn der Auftreffwinkel hinreichend gering bleibt. Der Auftreffwinkel kann beispielsweise höchstens 10°, insbesondere höchstens 5°, gemessen zur Oberflächennormalen, betragen.

Die Hubvorrichtung kann mechanisch besonders wenig komplex, insbesondere mit nur wenigen Freiheitsgraden, ausgebildet sein, wenn die Fahrplattform eingerichtet ist, wenigstens eines der Elemente aus einer Elementegruppe, die die Hubvorrichtung, die Werkzeugmaschine und das Werkzeug umfasst, relativ zur Oberflächennormalen zu verschwenken. Alternativ oder ergänzend ist auch denkbar, dass die Hubvorrichtung über ein, vorzugsweise lösbar feststellbares und / oder elektrisch steuerbares, Gelenk an der Fahrplattform angelenkt ist.

Für eine hinreichende Kippsicherheit kann die Fahrplattform wenigstens drei, vorzugsweise voneinander unabhängige, Antriebspunkte aufweisen. Ein Antriebspunkt kann beispielsweise ein Rad, einen Kettenantrieb und / oder ein Antriebsbein umfassen. Um die Fahrplattform bewegen zu können, kann wenigstens einer, vorzugsweise wenigstens zwei, der Antriebspunkte motorisch antreibbar sein.

Die Fahrplattform kann beispielsweise ein Räderfahrwerk umfassen. Das Räderfahrwerk kann beispielsweise drei oder vier Räder aufweisen.

Das wenigstens eine Element der Elementegruppe, beispielsweise die Hubvorrichtung, lässt sich besonders einfach verschwenken, wenn wenigstens einer der Antriebspunkte eine Höhenverstellung aufweist. Der Antriebspunkt kann somit höhenverstellbar sein. Durch Verstellen der Höhenverstellung kann eine Neigung eines Trägers der Fahrplattform einstellbar sein. Am Träger kann die Hubvorrichtung angeordnet sein. Somit kann die Hubvorrichtung durch Verstellen der Höhenverstellung verschwenkbar sein.

Die Höhenverstellung kann einen Hebelarm aufweisen. Der Hebelarm kann einenends am Träger und anderenends am Antriebspunkt angreifen. Dann kann durch die Höhenverstellung die Höhe verstellbar sein, die der Träger an einem Angriffspunkt des Hebelarms über einem Untergrund, auf dem sich der Antriebspunkt befindet, aufweist.

Die Höhe jedes einzelnen Antriebspunkts, d. h. jedes einzelnen Angriffspunkts am Träger, kann unabhängig von den Höhen der anderen Antriebspunkte verstellbar sein.

Der Bauroboter kann eingerichtet sein, die Höhen derart zu verstellen, dass sich ein Massenschwerpunkt des gesamten Roboters über oder auf dem Träger, insbesondere über oder auf einem Mittelpunkt des Trägers, befindet. Somit kann der Bauroboter zu jedem Zeitpunkt ausbalanciert sein. Auch auf unebenen Untergründen kann somit sichergestellt sein, dass der Bauroboter nicht umstürzt.

Denkbar ist auch, dass wenigstens einer der Antriebspunkte, insbesondere die Höhenverstellung des Antriebspunkts, selbsttätig blockierend ausgebildet ist. Ein selbsttätig blockierender Antriebspunkt kann derart ausgebildet sein, dass er nur durch eine aktive, beispielsweise elektrisch gesteuerte, Betätigung verstellbar ist. Bei einer Störung, beispielsweise bei einem Energieausfall, kann somit der Bauroboter in seiner jeweils letzten Stellung vor der Störung verharren. Somit können etwaige Folgeschäden aufgrund der Störung vermieden werden. Ist der Bauroboter beispielsweise ausgebildet, Löcher in Gebäudedecken zu bohren, und weist dazu eine Hubvorrichtung mit einem verhältnismäßig großen Hub, beispielsweise einem Hub von wenigstens 4m, auf, und ist der Bauroboter Akkumulator-betrieben, so kann im Fall eines entleerten Akkumulators, d. h. bei einem Stromausfall, sichergestellt werden, dass der Bauroboter in seiner letzten, in der Regel ausbalancierten, Stellung verharrt. Somit ist sichergestellt, dass der Bauroboter nicht aufgrund des Stromausfalls umstürzt. Schwere Folgeschäden wie beispielsweise Personenschäden durch den umstürzenden Bauroboter können somit vermieden werden. Auch hierdurch lassen sich die Einsatzmöglichkeiten des Bauroboters erweitern und der Bauroboter kann noch flexibler eingesetzt werden.

Durch Verschwenken der Hubvorrichtung lassen sich Freiheitsgrade der Hubvorrichtung einsparen. Eine Hubvorrichtung mit einer geringen Anzahl an Freiheitsgraden kann geringe Herstellungskosten aufweisen. Aufgrund einer geringeren mechanischen Komplexität kann eine solche Hubvorrichtung auch weniger störanfällig sein. Beispielsweise kann die Hubvorrichtung höchstens zwei Freiheitsgrade, vorzugsweise genau einen Freiheitsgrad, aufweisen. Die Hubvorrichtung kann beispielsweise lediglich einen eindimensionalen Linearantrieb aufweisen.

Für einen besonders flexiblen Einsatz des Bauroboters kann dieser tragbar ausgebildet sein. Insbesondere kann der Bauroboter ein Gesamtgewicht von unter 50 kg, insbesondere von unter 25 kg, aufweisen. Denkbar ist dazu alternativ oder ergänzend auch, dass der Bauroboter, zumindest die Hubvorrichtung, reversibel, vorzugsweise werkzeuglos, in Einzelteile zerlegbar ist. Jedes der Einzelteile kann weniger als 50 kg, beispielsweise weniger als 25 kg, wiegen, sodass jedes Einzelteil und damit auch der Bauroboter problemlos tragbar sind.

Der Bauroboter kann in wenigstens zwei verschiedenen Betriebsmodi betreibbar sein.

In einem ersten Betriebsmodus kann der Bauroboter eingerichtet sein, selbsttätig das Werkzeug auf eine, insbesondere vorbestimmte, Arbeitsposition auszurichten. Die Arbeitsposition kann beispielsweise einer Position entsprechen, an der ein Loch gebohrt werden soll, an der gemeißelt werden soll, an der ein Bauelement wie beispielsweise ein Betonanker, insbesondere ein Betondübel oder eine Betonschraube, gesetzt werden soll, oder einer anderen derartigen Bauarbeit, die an der Arbeitsposition ausgeführt werden soll. Zur selbsttätigen Ausrichtung auf die Arbeitsposition kann der Bauroboter eingerichtet sein, seine eigene Position und / oder Lage zu bestimmen. Er kann eingerichtet sein, eine Position und / oder Lage der Arbeitsposition zu bestimmen. Er kann insbesondere eingerichtet sein, eine Relativposition und / oder Relativlage des Bauroboters zur Arbeitsposition zu bestimmen. Er kann eingerichtet sein, anhand einer der Positionen, Lagen, Relativpositionen und / oder Relativlagen den Auftreffwinkel zu bestimmen. Er kann dann eingerichtet sein, dem bestimmten Auftreffwinkel entsprechend die Hubvorrichtung zu bewegen und / oder, insbesondere zur Verringerung eines großen Auftreffwinkels, die Fahrplattform zu bewegen.

In einem zweiten Betriebsmodus kann der Bauroboter derart eingerichtet sein, dass der Auftreffwinkel durch Handführung einstellbar ist. Denkbar ist, dass der Bauroboter eingerichtet ist, dass ein Benutzer des Bauroboters wenigstens eines der Elemente der Elementgruppe, beispielsweise die Hubvorrichtung, insbesondere durch Kontakt mit der Hubvorrichtung und / oder durch Ausüben einer Druckkraft auf die Hubvorrichtung, bewegen kann. Der Bauroboter kann eingerichtet sein, insbesondere während der Handführung, Gewichtskräfte zu kompensieren, sodass der Bauroboter durch den Kontakt oder die Druckkraft zwar seine Stellung verändert, nicht aber insgesamt umstürzt.

Insbesondere kann durch die Handführung der Auftreffwinkel einstellbar sein. Somit kann der Benutzer mit lediglich geringem Kraftaufwand das Werkzeug auf die Arbeitsposition ausrichten. Insbesondere ist es denkbar, dass der Benutzer den Bauroboter zunächst an eine Ausgangsposition verlagert. Durch Verschwenken, beispielsweise der Hubvorrichtung, kann der Benutzer dann das Werkzeug nacheinander auf verschiedene, hinreichend nahe beieinander liegende Arbeitspositionen ausrichten und die jeweils gewünschten Bauarbeiten an den jeweiligen Arbeitspositionen ausführen.

Der Bauroboter kann eingerichtet sein, dass durch Betätigen eines Betätigungselements, beispielsweise einer Taste, die Ausführung einer Bauarbeit, beispielsweise ein Bohrvorgang, gestartet und / oder vollständig selbsttätig ausgeführt wird. Beispielsweise kann der Bauroboter eingerichtet sein, auf Betätigen des Betätigungselements bis zu einer vorab definierten Tiefe in das Gebäudeelement zu bohren und anschließend das Werkzeug aus dem gebohrten Bohrloch wieder herauszuziehen sowie, vorzugsweise, die Hubvorrichtung bis zu einer vor ab definierten End-Höhenlage wieder einzuziehen.

Ist das zu bearbeitende Gebäudeelement eine Gebäudedecke, kann somit der Benutzer die jeweils gewünschten Bauarbeiten aus der Ferne ausführen und erspart sich somit körperlich stark belastende Überkopfarbeiten.

Der Bauroboter kann mit unterschiedlichen Arten von Werkzeugmaschinen und Werkzeugen verwendbar sein.

Beispiele von Werkzeugen können Bohrwerkzeuge, insbesondere zum Hammerbohren in Gestein, Stahlbohrwerkzeuge oder Holzbohrwerkzeuge, Meißelwerkzeuge oder Setzwerkzeuge sein. Setzwerkzeuge können beispielsweise Werkzeuge zum Setzen, insbesondere zum Setzen von Befestigungselementen wie beispielsweise Schrauben, Nägeln, Ankern oder Dübeln, sein. Denkbar ist auch, dass das Werkzeug ein Markierwerkzeug, beispielsweise eine Farbsprühdüse umfassend, ist. Auch denkbar ist, dass das Werkzeug ein Überwachungswerkzeug und / oder ein Messwerkzeug ist, beispielsweise kann es einen Distanzmesser und / oder eine Kamera umfassen.

Entsprechend den Werkzeugen kann es sich bei den Werkzeugmaschinen um Bohrmaschinen, insbesondere Bohrhämmer, Meißelmaschinen, Setzgeräte, beispielsweise Direktsetzgeräte zum Setzen von Nägeln, Schraubmaschinen wie beispielsweise Schraubern mit oder ohne Schlag, oder dergleichen handeln.

Das Gebäudeelement kann beispielsweise eine Gebäudedecke, eine Gebäudewand und / oder einen Gebäudeboden umfassen.

Je größer der Hub der Hubvorrichtung ist und / oder je länger die Hubvorrichtung insgesamt ist, desto kleiner kann die maximal benötigte Auslenkung, mit der die Hubvorrichtung relativ zur Oberflächennormalen verschwenkt wird, und damit der Auftreffwinkel sein, um dennoch einen hinreichend großen Bereich von Arbeitspositionen abdecken zu können, ohne den Bauroboter verlagern zu müssen. Mit großem Hub und / oder langen Hubvorrichtungen können auch beispielsweise sehr hohe Gebäudedecken erreichbar sein, sodass die Einsatzmöglichkeiten des Bauroboters durch derartige Hubvorrichtungen weiter vergrößert werden kann.

Günstig ist es daher, wenn der Hub der Hubvorrichtung und / oder eine maximale Gesamtlänge der Hubvorrichtung mindestens 3 m, bevorzugt mindestens 4 m, besonders bevorzugt mindestens 5 m betragen. Dazu kann die Hubvorrichtung auch mehrteilig ausgebildet sein. Um Gewicht zu sparen, kann einer von mehreren Teilen der Hubvorrichtung manuell längenveränderbar sein. Ein anderer Teil der Hubvorrichtung kann elektrisch ausfahrbar sein.

Der Bauroboter kann einen Beschleunigungs- und / oder einen Neigungssensor, beispielsweise ein Inertialmessssystem, englisch: inertial measurement unit, im Folgenden als "IMU" bezeichnet, aufweisen. Der Beschleunigungssensor und / oder der Neigungssensor können an der Fahrplattform angeordnet sein. Alternativ oder ergänzend können sie auch an der Hubvorrichtung und / oder an der Werkzeugmaschine angeordnet sein.

Der Bauroboter kann eingerichtet sein, mit Hilfe des Beschleunigungssensors und / oder des Neigungssensors einen Neigungswinkel der Hubvorrichtung und / oder der Fahrplattform zu ermitteln, wobei er weiter eingerichtet sein kann, anhand des Neigungswinkels, beispielsweise mit Hilfe der Höhenverstellung, Unebenheiten, Neigungen, etc., eines Untergrundes, auf dem sich der Bauroboter befindet, auszugleichen und / oder anhand des Neigungswinkels zu ermitteln, ob und / oder wie das Werkzeug einen gewünschten Auftreffwinkel erreichen kann und / oder bereits erreicht hat.

Der Bauroboter kann zur Ausführung von Bauarbeiten auf einer Hochbau-Baustelle und / oder einer Tiefbau-Baustelle ausgebildet sein.

Die Hubvorrichtung kann auch einen mehrachsigen Arm umfassen.

Durch die Möglichkeit, den Auftreffwinkel einzustellen und somit ausgehend von einer Position der Fahrplattform einen Bereich von Arbeitspositionen erreichen zu können, ist es nicht erforderlich, dass die Fahrplattform auf besonders engem Raum rangiert. Die Fahrplattform kann daher auch ohne eine Lenkachse und / oder ohne lenkbare Antriebspunkte ausgebildet sein. Dadurch kann die mechanische Komplexität des Bauroboters weiter verringert werden.

Zur Steuerung ein oder mehrerer, vorzugsweise aller, vorangehend beschriebenen Funktionalitäten des Bauroboters kann der Bauroboter einen Steuercomputer aufweisen.

Der Steuercomputer kann einen Prozessor, eine Speichereinheit und einen auf dem Prozessor ausführbaren Programmcode aufweisen. Der Prozessor kann ein oder mehrere Unterprozessoren aufweisen. Der Programmcode kann eingerichtet sein, bei Ausführung auf dem Prozessor ein oder mehrere der Funktionalitäten, insbesondere alle Funktionalitäten, durch Steuerung der entsprechenden Elemente des Bauroboters zu implementieren.

Insbesondere kann der Programmcode eingerichtet sein, einen vordefinierten und / oder bestimmten Auftreffwinkel einzustellen. Alternativ oder ergänzend kann der Programmcode eingerichtet sein, wenigstens eines der Elemente der Elementegruppe zu verschwenken.

Der Bauroboter kann einen Kontaktarm aufweisen. Der Kontaktarm kann eingerichtet sein, vor, während und / oder nach der Ausführung einer Bauarbeit das Gebäudeelement zu kontaktieren. Beispielsweise kann der Kontaktarm parallel oder zumindest im Wesentlichen parallel zur Werkzeugmaschine und / oder zum Werkzeug angeordnet sein. Der Kontaktarm kann unabhängig von der Hubvorrichtung teleskopierbar und / oder bewegbar sein. Dann kann es möglich sein, dass der Bauroboter in Kontakt mit dem Gebäudeelement tritt, insbesondere dieses mit seinem Kontaktarm berührt und / oder an diesem mit Hilfe des Kontaktarms fixiert ist. Er kann beispielsweise durch Kraftschluss, beispielsweise mit Hilfe von Unterdruck, durch Stoffschluss und / oder durch Formschluss, beispielsweise durch Eindringen eines stabförmigen Abschnitts des Kontaktarms in ein zuvor gefertigtes Bohrloch, am Gebäudeelement fixiert sein. Durch den Kontaktarm kann somit die Stabilität während der Ausführung der Bauarbeit verbessert werden. Dies kann beispielsweise bei Bauarbeiten mit großen Werkzeugen, beispielsweise Kernbohrwerkzeugen, nützlich sein.

Der Bauroboter kann eine Kamera zur Aufnahme von Bildaufnahmen aufweisen. Die Kamera kann derart ausgebildet, insbesondere ausgerichtet, sein, dass sie ein oder mehrere Bildaufnahmen eines das Werkzeug und / oder die Arbeitsposition enthaltenden Bereichs aufzunehmen. Bildaufnahmen können dann beispielsweise auf einem Bediengerät, beispielsweise einem Smartphone oder einer Fernbedienung zur Steuerung des Bauroboters, von einem Benutzer des Bauroboters betrachtet werden. So kann eine auszuführende Bauarbeit überwacht werden, ohne dass der Benutzer zum Gebäudeelement, beispielsweise zur Gebäudedecke, blicken muss. Auch dies kann den Benutzer weiter von körperlichen Belastungen entlasten. Ein Bauroboter zur Ausführung von Bauarbeiten an Gebäudeelementen, mit einer Werkzeugmaschine, in die ein Werkzeug aufnehmbar ist, und einer Kamera, die eingerichtet ist, Bildaufnahmen eines Bereichs, der das Werkzeug und / oder eine Arbeitsposition auf dem Gebäudeelement umfasst, aufzunehmen, kann daher an sich bereits besonders vorteilhaft sein und insbesondere körperliche Belastungen eines Bauarbeiters reduzieren. Der Bauroboter kann eine Betrachtungsvorrichtung aufweisen, beispielsweise in Form eines Smartphones und / oder einer Fernbedienung zur Fernsteuerung des Bauroboters, die eine Anzeige aufweist. Die Betrachtungsvorrichtung kann eingerichtet sein, von der Kamera aufgenommene Bildaufnahmen anzuzeigen. Ein solcher Bauroboter kann des Weiteren ein oder mehrere der vorangehend und / oder nachfolgend beschriebenen Merkmale eines Bauroboters aufweisen.

Der Bauroboter kann insbesondere für Bauarbeiten an Gebäudedecken und / oder Gebäudewänden eingerichtet sein. Dazu kann die Werkzeugmaschine in einer vertikalen und / oder einer horizontalen Lage an der Hubvorrichtung montierbar sein.

In den Rahmen der Erfindung fällt des Weiteren **ein Verfahren zum Bearbeiten** eines Gebäudeelements, beispielsweise zum Bohren oder zum Meißeln des Gebäudeelements oder zum Setzen eines Befestigungselements in das Gebäudeelement, mit einem Bauroboter, der eine Werkzeugmaschine umfasst, beispielsweise eine Bohrwerkzeugmaschine oder eine Meißelwerkzeugmaschine, wobei in der Werkzeugmaschine ein Werkzeug, beispielsweise ein Bohrwerkzeug oder ein Meißelwerkzeug, mit dem das Gebäudeelement bearbeitet wird, aufgenommen ist, wobei das Werkzeug vom Bauroboter unter einem Auftreffwinkel schräg zu einer Oberflächennormalen des Gebäudeelements ausgerichtet wird.

Durch die schräge Ausrichtung des Werkzeugs kann ein verhältnismäßig weiter Bereich von Arbeitspositionen mit dem Werkzeug erreicht werden, ohne dass der Bauroboter insgesamt verlagert werden muss. Arbeiten an benachbarten Arbeitspositionen können schnell und damit effizient und kostengünstig ausgeführt werden. Der Bauroboter kann mechanisch wenig komplex ausgebildet sein, sodass seine Herstellungskosten gering ausfallen können. Er kann ein geringes Gewicht aufweisen, wodurch seine Einsatzmöglichkeiten zusätzlich erweitert sein können.

Der Auftreffwinkel kann gering sein. Beispielsweise kann er höchstens 10°, insbesondere höchstens 5°, gemessen zur Oberflächennormalen, betragen. Bei großem Hub und / oder bei einer langen Gesamtlänge der Hubvorrichtung können auch noch geringere Auftreffwinkel, beispielsweise von höchstens 1°, ausreichen, um einen hinreichend großen Bereich von Arbeitspositionen ohne Verlagerung des Bauroboters abdecken zu können.

Das Werkzeug kann einfach ausgerichtet werden, wenn eine Fahrplattform des Bauroboters wenigstens eines der Elemente aus einer Gruppe, die die Hubvorrichtung, die Werkzeugmaschine und das Werkzeug umfasst, relativ zur Oberflächennormalen verschwenkt.

Das Verfahren kann mit einem Bauroboter, der wenigstens eines Merkmale eines Bauroboters der vorangehend beschriebenen Art aufweist, ausgeführt werden.

Insbesondere ist denkbar, dass der Bauroboter, insbesondere ein Programmcode eines Steuercomputers des Bauroboters, eingerichtet ist, das Verfahren durch Steuerung von weiteren Elementen des Bauroboters durchzuführen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Bauroboter und ein Gebäudeelement in einer perspektivischen Schrägansicht,
- Fig. 2 bis Fig. 4: den Bauroboter gemäß Fig. 1 in einer Ansicht von der Seite, in einer Ansicht von oben und in einer Ansicht von unten,
- Fig. 5: eine schematische Darstellung eines Auftreffwinkels des Bauroboters auf das Gebäudeelement, und
- Fig. 6: ein Verfahren zum Bearbeiten eines Gebäudeelements.

In der nachfolgenden Beschreibung der Figuren werden zur Erleichterung des Verständnisses für gleiche oder sich funktional entsprechende Elemente über die verschiedenen Figuren hinweg jeweils die gleichen Bezugszeichen verwendet.

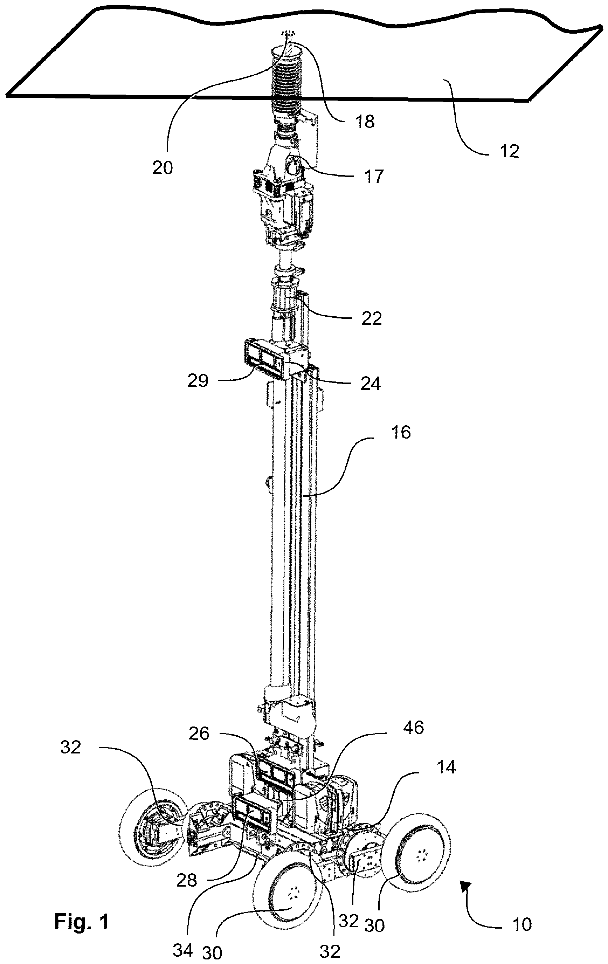

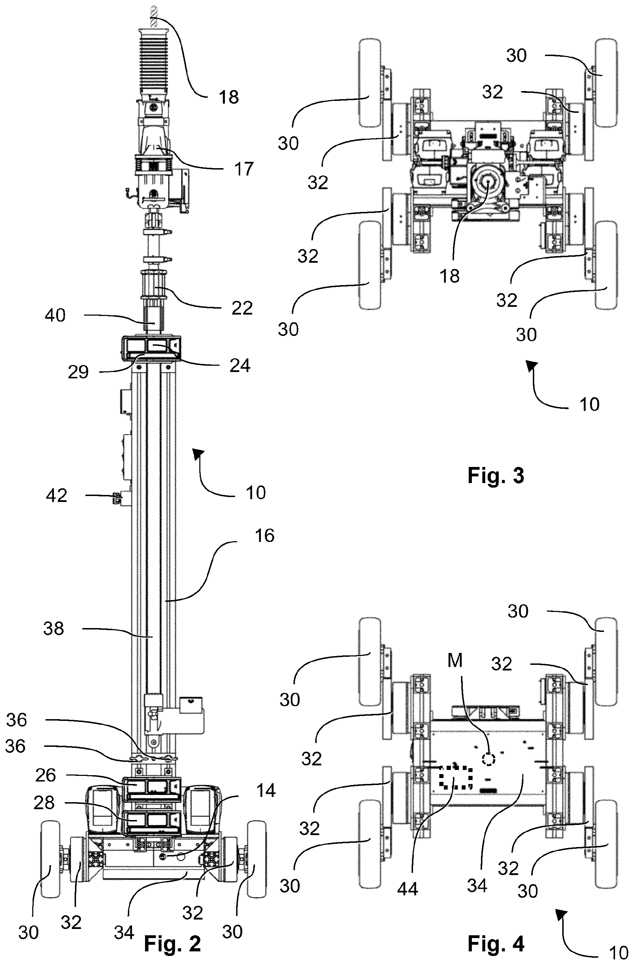

**Fig. 1** zeigt einen Bauroboter **10** zur Bearbeitung eines Gebäudeelements **12**. **Fig. 2** zeigt eine Seitenansicht des Bauroboters 10. **Fig. 3** und **Fig. 4** zeigen eine Ansicht des Bauroboters 10 von oben beziehungsweise von unten.

Der Bauroboter 10 umfasst eine Fahrplattform **14**, eine Hubvorrichtung **16** und eine an der Hubvorrichtung 16 angeordnete Werkzeugmaschine **17**. In der Werkzeugmaschine 17 ist ein Werkzeug **18** aufgenommen. Das Werkzeug 18 kontaktiert eine Arbeitsposition **20** auf dem Gebäudeelement 12. Entlang der Hubvorrichtung 16 befinden sich ein Prisma **22** sowie ein erster Zeilensensor **24**, ein zweiter Zeilensensor **26** sowie ein dritter Zeilensensor **28**. Weiter weist der Bauroboter 10 einen Steuercomputer **46** auf.

Die Werkzeugmaschine 17 ist als Bohrhammermaschine ausgebildet. Das Werkzeug 18 ist ein Betonbohrer.

Das Gebäudeelement 12 ist eine Gebäudedecke aus Stahlbeton.

Der Bauroboter 10 ist eingerichtet, an der Arbeitsposition 20 ein Loch in das als Gebäudedecke ausgebildete Gebäudeelement 12 zu bohren.

Die Zeilensensoren 24, 26, 28 sind eingerichtet, die Position auftreffender Lichtstrahlen oder Lichtpunkte zu detektieren. Dazu weisen sie jeweils eine lichtempfindliche Sensorzeile **29** auf. Zur Vereinfachung der Darstellung ist in Fig. 1 lediglich eine der Sensorzeilen 29 mit einem Bezugszeichen versehen. Die lichtempfindliche Sensorzeilen 29 können eine Breite von beispielsweise 10 cm aufweisen. Über die Breite der Sensorzeilen 29 erstrecken sich jeweils Matrizen aus lichtempfindlichen Einzelsensoren.

Der erste Zeilensensor 24 und der zweite Zeilensensor 26 sind vertikal versetzt übereinander angeordnet. Der dritte Zeilensensor 28 ist schräg nach vorne unterhalb des zweiten Zeilensensors 26 angeordnet. Mit Hilfe der drei Zeilensensoren 24, 26, 28 kann der Verlauf eines die Arbeitsposition 20 markierenden Linienlichtstrahls, beispielsweise ein entsprechend ausgerichteter Laserstrahl, detektiert werden. Aus dem detektierten Verlauf des Linienlichtstrahls kann auf die Position der Arbeitsposition 20 geschlossen werden. Ist beispielsweise bekannt, dass der Linienlichtstrahl exakt vertikal ausgerichtet ist, kann mit Hilfe der drei Zeilensensoren 24, 26, 28 alternativ oder ergänzend ein Neigungswinkel der Hubvorrichtung 16 ermittelt werden.

Alternativ oder ergänzend kann das Prisma 22, beispielsweise in Verbindung mit einer Totalstation, verwendet werden, um eine Position und / oder Lage des Bauroboters 10 und insbesondere des Werkzeugs 18 zu ermitteln.

Die Fahrplattform 14 weist vier Antriebspunkte **30** auf, von denen aus Darstellungsgründen in Fig. 1 lediglich drei Antriebspunkte 30 zu erkennen sind. Die Antriebspunkte 30 weisen Räder auf. Die Räder sind direktionale Räder. Es ist nicht notwendig, jedoch denkbar, dass die Räder omnidirektionale Räder sind.

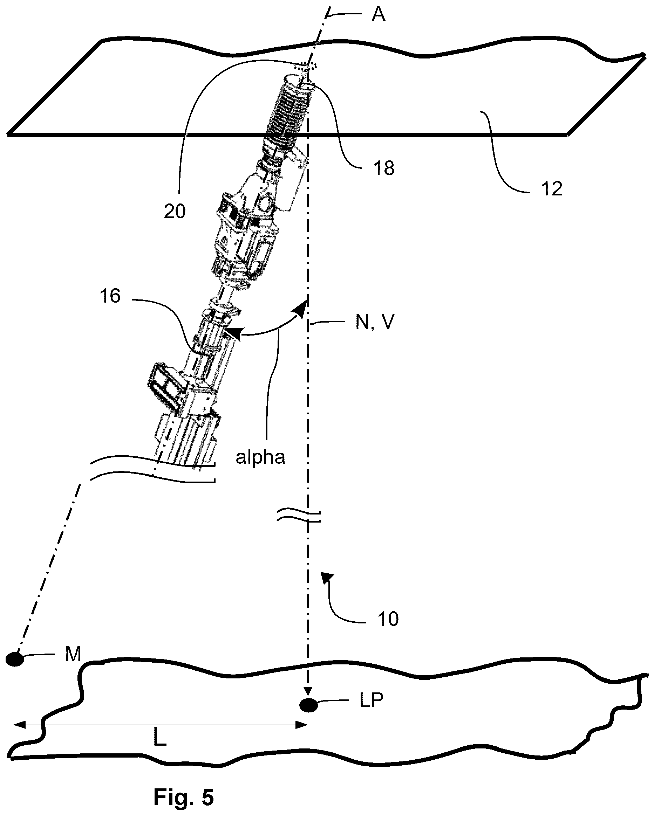

Jeder der Antriebspunkte 30 weist eine Höhenverstellung **32** auf. Die Höhenverstellungen 32 greifen an einem Träger **34** an. Auf dem Träger 34 ist die Hubvorrichtung 16 angeordnet. Mit Hilfe der Höhenvorstellungen 32 lässt sich somit der Träger 34 verschwenken. Durch Verschwenken des Trägers 34 lassen sich somit auch die Hubvorrichtung 16 und die an ihr angeschlossenen Werkzeugmaschine 17 und damit das Werkzeug 18 verschwenken. Wie noch weiter unten im Zusammenhang mit Fig. 5 näher erläutert werden wird, kann der Bauroboter 10 somit mithilfe der Höhenvorstellungen 32 der Fahrplattform 14 die Hubvorrichtung 16 und damit die Werkzeugmaschine 17 mit ihrem Werkzeug 18 relativ zu einer Oberflächennormalen des Gebäudeelements 12 verschwenken.

Die Höhenverstellungen 32 sind selbsttätig blockierend ausgebildet. Dazu können sie beispielsweise ein Schneckengetriebe aufweisen. Somit verstellen sich die Höhenvorstellungen 32 und damit ein Neigungswinkel der Fahrplattform 14 nur dann, wenn die Schneckengetriebe, beispielsweise mithilfe eines Stellmotors, bewegt werden.

Die Hubvorrichtung 16 weist einen einzigen Freiheitsgrad auf. Insbesondere ist sie längenveränderlich. Wie insbesondere aus Fig. 2 erkennbar, lässt sich mit Fixierhebeln **36** ein unterer Teil **38** der Hubvorrichtung 16 lösen, manuell entlang der übrigen Hubvorrichtung 16 verschieben und anschließend wieder an der übrigen Hubvorrichtung 16 fixieren. Somit lässt sich der Bauroboter 10 zunächst manuell grob auf eine erste Länge beziehungsweise Höhe einstellen, von der aus der Bauroboter 10 selbsttätig einen oberen Teil **40** der Hubvorrichtung 16 je nach Bedarf, insbesondere elektrisch angetrieben, so weit ausfahren kann, dass das Werkzeug 18 die Arbeitsposition 20 erreicht oder gegebenenfalls an dieser in das Gebäudeelement 12 eindringt.

Insgesamt ist der Bauroboter 10 derart dimensioniert, dass sein Gesamtgewicht unter 50 kg beträgt. Ist, wie beispielsweise in Fig. 1 und Fig. 2 dargestellt, der Bauroboter 10 bis zu einer minimalen Länge eingefahren, so weist er eine Höhe von beispielsweise weniger als 1,5 m auf. Die Fahrplattform 14 nimmt eine Grundfläche von weniger als 60 x 60 cm ein. Auch dadurch ist der Bauroboter 10 problemlos von einem Bauarbeiter tragbar und lässt sich innerhalb üblicher Gebäude beispielsweise von einem Raum in einen anderen transportieren.

Der Bauroboter 10 weist ferner einen Betriebsmoduswahlschalter **42** (siehe insbesondere Fig. 2) auf. Der Betriebsmoduswahlschalter 42 ermöglicht es, den Bauroboter 10 in einem ersten Betriebsmodus zu betreiben, indem dieser selbsttätig die Arbeitsposition 20 mit seinem Werkzeug 18 anfährt. In einem zweiten Betriebsmodus lässt sich der Bauroboter 10 mittels Handführung steuern. Insbesondere lässt sich in dem zweiten Betriebsmodus die Hubvorrichtung 16 durch entsprechenden gerichteten Druck manuell in eine gewünschte Richtung verschwenken.

In Fig. 4 ist schematisch eine IMU **44** abgebildet. Die IMU 44 befindet sich auf dem Träger 34 und ist daher in der Ansicht des Bauroboters 10 von unten in Fig. 4 nicht sichtbar.

Ferner zeigt Fig. 4 einen Mittelpunkt M des Trägers 34.

Der Bauroboter 10 ist eingerichtet, mit Hilfe der IMU 44 Beschleunigungen und Neigungswinkel des Trägers 34 gegen die Horizontale zu messen. Somit lassen sich beispielsweise Unebenheiten des Untergrundes mit Hilfe der IMU 44 detektieren. Der Bauroboter 10 ist ferner eingerichtet, mit Hilfe der Höhenverstellungen 32 derartige Neigungswinkel und / oder Unebenheiten, insbesondere während einer Bewegung der Fahrplattform 14, zu kompensieren, sodass der Bauroboter 10 durchgängig gegen Umstürzen gesichert ist.

Anhand von **Fig. 5** soll näher erläutert werden, wie das Werkzeug 18 mit seiner Längsachse **A** unter einem Auftreffwinkel **alpha** schräg zu einer Oberflächennormalen **N** des zu bearbeitenden Gebäudeelements 12 ausgerichtet wird.

Dazu zeigt **Fig. 5** vereinfachend einen Teil der Hubvorrichtung 16. Insbesondere zeigt Fig. 5, dass das Werkzeug 18 an der Arbeitsposition 20 das Gebäudeelement 12 schräg kontaktiert. Somit ergibt sich der, insbesondere von Null verschiedene, Auftreffwinkel alpha zwischen der Längsachse A des Werkzeugs 18 und der Oberflächennormalen N durch die Arbeitsposition 20. Da in diesem Fall das Gebäudeelement 12 entsprechend einer Gebäudedecke horizontal verläuft, verläuft in dem dargestellten Ausführungsbeispiel die Oberflächennormale N auch parallel zu einer Vertikalen **V**.

Dabei ist aus Darstellungsgründen der Auftreffwinkel alpha in Fig. 5 erheblich überzeichnet. Bei einem tatsächlichen Anwendungsfall kann der Auftreffwinkel alpha weniger als 10°, insbesondere weniger als 5°, besonders bevorzugt weniger als 1°, sowie beispielsweise mehr als 0,1°, betragen.

Zu erkennen ist, dass durch die Schrägstellung des Werkzeugs 18 entsprechend dem Auftreffwinkel alpha der Mittelpunkt M des Trägers 34 (siehe Fig. 2) um eine Distanz **L** horizontal beabstandet von einem Lotpunkt **LP**, der sich aus dem auf den Untergrund gefällten Lot der Arbeitsposition 20 ergibt, ist. Damit ist der Mittelpunkt M ebenfalls um die Distanz L horizontal beabstandet von der Arbeitsposition 20.

Somit ist der Bauroboter 10 eingerichtet, eine Bauarbeit, hier Bohren eines Loches, an der Arbeitsposition 20 zu verrichten, selbst wenn sich die Fahrplattform 14, insbesondere der Mittelpunkt M, nicht vertikal unterhalb der Arbeitsposition 20 befindet. Somit bleibt es erspart, dass die Fahrplattform 14 entsprechend rangiert wird, um den Mittelpunkt M vertikal unter die Arbeitsposition 20 zu bringen. Es ist erkennbar, dass damit auch Arbeitspositionen 20 erreichbar werden, die sonst mangels freien Raums für die Fahrplattform 14 sonst nicht erreichbar wären. Insbesondere Randbereiche des Gebäudeelemente 12 können dadurch überhaupt oder zumindest einfacher erreichbar sein.

Im zweiten Betriebsmodus, also dem manuellen Betriebsmodus, ist der Auftreffwinkel durch Handführung der Hubvorrichtung 16 einstellbar. Insbesondere lässt sich die Hubvorrichtung 16 durch Druck auf diese verschwenken. Dabei ist der Bauroboter 10 eingerichtet, eine maximal erlaubte Auslenkung und damit den maximal erreichbaren Auftreffwinkel alpha so weit zu begrenzen, dass der Bauroboter 10 auch in diesem Betriebsmodus zu keinem Zeitpunkt umstürzen kann.

In beiden Betriebsmodi ist der Bauroboter 10 eingerichtet, die jeweils erreichte Neigung der Hubvorrichtung 16 und damit des Auftreffwinkels alpha durch Nachführen der Höhenverstellungen 32 einzustellen beziehungsweise abzustützen. Im zweiten Betriebsmodus führt dies beispielsweise dazu, dass eine manuell eingestellte Neigung der Hubvorrichtung 16 nach Loslassen der Hubvorrichtung 16 erhalten bleibt. Somit kann der Benutzer durch Ausfahren der Hubvorrichtung 16, beispielsweise gesteuert über eine nicht abgebildete Fernsteuerung, die Arbeitsposition 20 mit dem Werkzeug 18 anfahren.

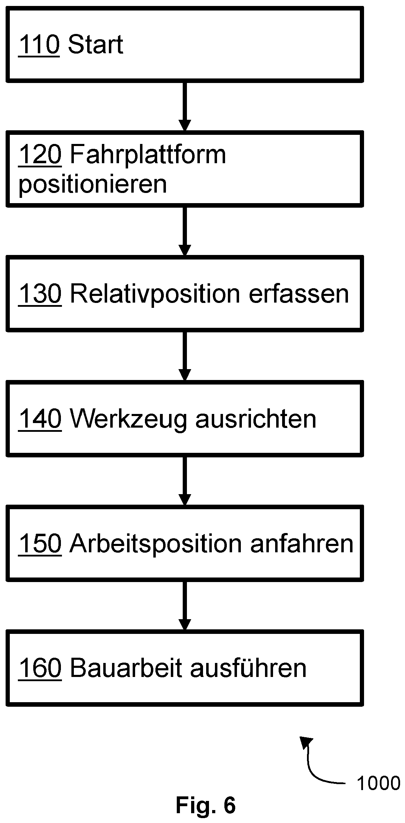

Abschließend zeigt **Fig. 6** ein Verfahren **1000** zum Bearbeiten eines Gebäudeelements.

Zur Erläuterung des Verfahrens 1000 wird auf die vorangehend beschriebenen Figuren 1 bis 5 sowie die dort eingeführten Bezugszeichen Bezug genommen.

Das Verfahren 1000 wird ebenfalls am Beispiel des Bohrens eines Loches an der Arbeitsposition 20 des Gebäudeelements 12 mit Hilfe eines Bauroboters, beispielsweise dem Bauroboter 10, dargestellt.

Während eines Starts **110** wird der Bauroboter 10 zur Ausführung einer gewünschten Bauarbeit, hier des Bohrens eines Lochs an der Arbeitsposition 20, vorbereitet. Beispielsweise kann, insbesondere bei hohen Deckenhöhen, zunächst die Hubvorrichtung 16 mit ihrem unteren Teil 38 manuell ein Stück weit, beispielsweise einen Meter, ausgefahren werden, sodass der obere Teil 40 der Hubvorrichtung 16 anschließend mit dem Werkzeug 18 das Gebäudeelement 12, also die Gebäudedecke, erreichen kann sowie zum Bohren des Loches in diese eindringen kann.

Anschließend kann der Bauroboter 10 in einer Phase **120** grob positioniert werden.

Insbesondere kann die Fahrplattform 14 in der Nähe des Lotpunktes LP auf dem Untergrund unter der Arbeitsposition 20 positioniert werden. Die horizontale Distanz L zwischen dem Mittelpunkt M der Fahrplattform 14 und dem Lotpunkt LP sollte höchstens so groß sein, dass das Werkzeug 18 auf die Arbeitsposition 20 durch Verschwenken der Hubvorrichtung 16 ausgerichtet und zu dieser ausgefahren werden kann, ohne dass der Bauroboter 10 aus dem Gleichgewicht gerät und / oder umstürzt. Ebenso sollte der zum Erreichen der Arbeitsposition 20 erforderliche Auftreffwinkel alpha innerhalb des für den Zweck der auszuführenden Bauarbeit zulässigen Bereichs liegen. Für das hier als Beispiel gewählte Bohren eines Loches, in das nachfolgend beispielsweise ein Schraubanker eingeschraubt werden soll, sollten somit auch bei maximalem Auftreffwinkel alpha alle den Schraubanker betreffenden Bauvorschriften etc. eingehalten sein.

Im Beispielsfall des Schraubankers kann dies beispielsweise bedeuten, dass der Auftreffwinkel alpha höchstens 5 ° zu betragen hat. Bei einer Deckenhöhe von beispielsweise 5 m könnte die Distanz L somit bis zu ca. 0,4 m betragen.

In einer nachfolgenden Phase 140 wird dann eine Relativposition zwischen dem Werkzeug 18, insbesondere eine Spitze des Werkzeugs 18, und der Arbeitsposition 20 ermittelt. Dies kann beispielsweise erfolgen, indem mit Hilfe einer Totalstation und dem Prisma 22 sowie der IMU 44 eine Position und eine Lage des Werkzeugs 18 ermittelt wird. Die Arbeitsposition 20 kann farblich markiert sein, sodass auch die Position der Arbeitsposition 20 beispielsweise mithilfe der Totalstation ermittelt werden kann. Aus dem Vergleich der beiden ermittelten Positionen lässt sich dann die Relativposition ableiten.

In einer weiteren Phase **140** wird das Werkzeug 18 auf die Arbeitsposition 20 ausgerichtet. Dazu wird anhand der ermittelten Relativposition zunächst berechnet, mit welchem Neigungswinkel die Hubvorrichtung 16 zur Ausrichtung des Werkzeugs 18 zu verschwenken ist. Dann werden mithilfe der Fahrplattform 14, insbesondere mithilfe der Höhenverstellungen 32, der Träger 34 und damit die Hubvorrichtung 16 entsprechend verschwenkt, bis die Hubvorrichtung 16 den gewünschten Neigungswinkel erreicht.

In einer nachfolgenden Phase **150** wird die Hubvorrichtung 16 so weit ausgefahren, bis das Werkzeug 18 die Arbeitsposition 20 erreicht. Mit anderen Worten fährt das Werkzeug 18 die Arbeitsposition 20 an.

In einer weiteren Phase **160** wird an der Arbeitsposition 20 die auszuführende Bauarbeit ausgeführt. Gemäß dem hier zugrunde gelegten Beispiel wird insbesondere die Werkzeugmaschine 17 aktiviert, so dass das Werkzeug 18 beginnt, an der Arbeitsposition 20 ein Loch zu bohren. Zum Bohren wird die Hubvorrichtung 16 dem Bohrfortschritt entsprechend nachgeführt.

Sobald das Werkzeug 18 das Loch mit der gewünschten Tiefe gebohrt hat, wird die Hubvorrichtung 16 wieder zumindest teilweise eingefahren, um das Werkzeug 18 aus dem Loch herauszuziehen.

Anschließend wird die Werkzeugmaschine 17 deaktiviert.

Sofern sich weitere zu bearbeitende Arbeitspositionen entsprechend der Arbeitsposition 20 im vom Werkzeug 18 durch Neigen der Hubvorrichtung erreichbaren Bereich befinden, kann das Verfahren 1000 bei Phase 130, also dem Erfassen der Relativposition, beginnend in abgekürzter Weise wiederholt werden.

Sind alle Arbeitspositionen 20 innerhalb des Bereichs bearbeitet, kann das Verfahren 1000 beendet werden.

### Bezugszeichenliste

- 10: Bauroboter
- 12: Gebäudeelement
- 14: Fahrplattform
- 16: Hubvorrichtung
- 17: Werkzeugmaschine
- 18: Werkzeug
- 20: Arbeitsposition
- 22: Prisma
- 24: Zeilensensor
- 26: Zeilensensor
- 28: Zeilensensor
- 29: Sensorzeile
- 30: Antriebspunkt
- 32: Höhenverstellung
- 34: Träger
- 36: Fixierhebel
- 38: unterer Teil
- 40: oberer Teil
- 42: Betriebsmoduswahlschalter
- 44: IMU
- 46: Steuercomputer
- 110: Start
- 120: Phase
- 140: Phase
- 150: Phase
- 160: Phase
- 1000: Verfahren
- A: Längsachse
- L: Distanz
- LP: Lotpunkt
- M: Mittelpunkt
- N: Oberflächennormale
- V: Vertikale
- alpha: Auftreffwinkel

## Patentansprüche

1. **Bauroboter (10)** zur Bearbeitung eines Gebäudeelements (12), umfassend eine Fahrplattform (14), eine Hubvorrichtung (16), die auf der Fahrplattform (14) angeordnet ist, und eine an der Hubvorrichtung (16) angeordnete Werkzeugmaschine (17), in die ein Werkzeug (18) aufnehmbar ist,
**dadurch gekennzeichnet,**
**dass** der Bauroboter (10) eingerichtet ist, das Werkzeug (18) unter einem Auftreffwinkel (alpha), insbesondere selbsttätig, schräg zu einer Oberflächennormalen (N) eines zu bearbeitenden Gebäudeelements (12) auszurichten.

2. Bauroboter (10) nach dem vorhergehenden Anspruch, **dadurch gekennzeichnet, dass** der Auftreffwinkel (alpha) höchstens 10°, insbesondere höchstens 5°, gemessen zur Oberflächennormalen (N), beträgt.

3. Bauroboter (10) nach einem der vorhergehenden Ansprüche, **dadurch gekennzeichnet, dass** die Fahrplattform (14) eingerichtet ist, wenigstens eines der Elemente aus einer Elementegruppe, die die Hubvorrichtung (16), die Werkzeugmaschine (17) und das Werkzeug (18) umfasst, relativ zur Oberflächennormalen (N) und / oder zu einer Vertikalen (V) zu verschwenken.

4. Bauroboter (10) nach einem der vorhergehenden Ansprüche, **dadurch gekennzeichnet, dass** die Fahrplattform (14) wenigstens drei voneinander unabhängige Antriebspunkte (30) aufweist.

5. Bauroboter (10) nach einem der vorhergehenden Ansprüche, **dadurch gekennzeichnet, dass** wenigstens einer der Antriebspunkte (30) eine Höhenverstellung (32) aufweist.

6. Bauroboter (10) nach einem der vorhergehenden Ansprüche, **dadurch gekennzeichnet, dass** wenigstens einer der Antriebspunkte (30), insbesondere die Höhenverstellung (32) des Antriebspunkts (30), selbsttätig blockierend ausgebildet ist.

7. Bauroboter (10) nach einem der vorhergehenden Ansprüche, **dadurch gekennzeichnet, dass** die Hubvorrichtung (16) höchstens zwei Freiheitsgrade, vorzugsweise genau einen Freiheitsgrad, aufweist.

8. Bauroboter (10) nach einem der vorhergehenden Ansprüche, **dadurch gekennzeichnet, dass** der Bauroboter (10) ein Gesamtgewicht von unter 50 kg, insbesondere von unter 25 kg, aufweist und / oder dass der Bauroboter (10) reversibel, vorzugsweise werkzeuglos, in Einzelteile zerlegbar ist, wobei jedes der Einzelteile weniger als 50 kg, insbesondere weniger als 25 kg, wiegt.

9. Bauroboter (10) nach einem der vorhergehenden Ansprüche, **dadurch gekennzeichnet, dass** der Bauroboter (10) derart eingerichtet ist, dass der Auftreffwinkel (alpha) durch Handführung einstellbar ist.

10. Bauroboter (10) nach einem der vorhergehenden Ansprüche, **dadurch gekennzeichnet, dass** der Bauroboter (10) eine Kamera zur Aufnahme von Bildaufnahmen aufweist, wobei die Kamera derart ausgebildet, insbesondere ausgerichtet, ist, dass sie ein oder mehrere Bildaufnahmen eines das Werkzeug (18) und / oder die Arbeitsposition (20) enthaltenden Bereichs aufnimmt.

11. **Verfahren (1000)** zum Bearbeiten eines Gebäudeelements (12), beispielsweise zum Bohren oder zum Meißeln des Gebäudeelements (12) oder zum Setzen eines Befestigungselements in das Gebäudeelement (12), mit einem Bauroboter (10), der eine Werkzeugmaschine (17) umfasst, wobei in der Werkzeugmaschine (17) ein Werkzeug (18), beispielsweise ein Bohrwerkzeug oder ein Meißelwerkzeug, mit dem das Gebäudeelement (12) bearbeitet wird, aufgenommen ist,
**dadurch gekennzeichnet,**
**dass** das Werkzeug (18) vom Bauroboter (10) unter einem Auftreffwinkel (alpha) schräg zu einer Oberflächennormalen (N) des Gebäudeelements (12) und / oder zu einer Vertikalen (V) ausgerichtet wird.

12. Verfahren (1000) nach einem der beiden vorhergehenden Ansprüche, **dadurch gekennzeichnet, dass** der Auftreffwinkel (alpha) höchstens 10°, insbesondere höchstens 5°, gemessen zur Oberflächennormalen (N), beträgt.

13. Verfahren (1000) nach einem der Ansprüche 11 bis 12, **dadurch gekennzeichnet, dass** eine Fahrplattform (14) des Bauroboters wenigstens eines der Elemente aus einer Elementegruppe, die die Hubvorrichtung (16), die Werkzeugmaschine (17) und das Werkzeug (18) umfasst, relativ zur Oberflächennormalen (N) verschwenkt.
